# FASCICULE DE BREVET EUROPEEN

(11) **EP 3 631 401 B1**
(45) Date de publication et mention de la délivrance du brevet: **01.09.2021**
(21) Numéro de dépôt: 18730838.2
(22) Date de dépôt: 28.05.2018
(51) Int. Cl.: G01M 15/06, F02B 75/04, F02F 3/00, G01B 7/00

(54) **PISTON POUR MOTEUR A COMBUSTION INTERNE PORTANT UNE CIBLE, ET MOTEUR A COMBUSTION INTERNE COMPRENANT UN TEL PISTON**
KOLBEN FÜR EINE BRENNKRAFTMASCHINE MIT EINEM ZIEL UND BRENNKRAFTMASCHINE MIT SOLCH EINEM KOLBEN
PISTON FOR INTERNAL COMBUSTION ENGINE HAVING A TARGET, AND INTERNAL COMBUSTION ENGINE COMPRISING SUCH A PISTON

(30) Priorité: 29.05.2017 FR 1754682
(43) Date de publication de la demande: 08.04.2020
(73) Titulaire: MCE 5 Development, 69100 Villeubanne (FR)
(72) Inventeur: DURY, Philippe, 01700 Miribel (FR); MIEHE, Yves, 69003 Lyon (FR)
(74) Mandataire: IP Trust
(86) Numéro de dépôt international: PCT/FR2018/051238
(87) Numéro de publication internationale: WO 2018/220321

(56) Documents cités:
- DE-A1-102009 013 323
- DE-A1-102015 217 152
- JP-A- 2012 207 642
- US-A- 4 407 155

## Description

### DOMAINE DE L'INVENTION

La présente invention concerne un piston pour moteur à combustion interne. Elle concerne plus précisément un piston comprenant une cible prévue pour coopérer avec un détecteur de passage disposé dans le carter cylindre d'un moteur. Ce type de piston peut trouver une application dans le domaine des moteurs à rapport volumétrique variable.

### ARRIERE PLAN TECHNOLOGIQUE DE L'INVENTION

En avant-propos, on rappelle qu'un moteur à combustion interne comprend généralement un piston de combustion présentant une jupe permettant de guider le piston dans le cylindre, une bielle associée du côté de son pied à l'axe de piston et du côté de sa tête au palier d'un vilebrequin. Ces deux paliers sont généralement d'axes parallèles. La bielle a pour fonction de transmettre le mouvement de translation du piston d'un « point mort haut » à un « point mort bas » au mouvement de rotation du vilebrequin. DE 10 2015 217152 A1, US 4 407 155 A et DE 10 2009 013323 A1 divulguent des pistons pour moteur à combustion interne comprenant une cible.

Il est généralement admis que l'adaptation du rapport volumétrique d'un moteur à sa charge permet d'améliorer grandement le rendement énergétique du moteur. Par exemple il est parfois recherché de faire varier le rapport volumétrique entre environ une valeur de 12 en l'absence de charge à une valeur de l'ordre de 8 à pleine charge.

On rappelle que le rapport volumétrique d'un moteur à combustion interne, souvent appelé taux de compression, correspond au rapport entre le volume de la chambre de combustion lorsque le piston est à son point mort bas ; et le volume de la chambre de combustion lorsque le piston est à son point mort haut.

On connaît de multiples solutions dans l'état de la technique permettant d'ajuster le rapport volumétrique et/ou la cylindrée d'un moteur à combustion interne.

Quelle que soit la solution mise en œuvre pour permettre cet ajustement, il est souvent nécessaire d'avoir une mesure la plus directe possible du rapport volumétrique, par exemple au niveau d'un calculateur, pour piloter efficacement le moteur. Cette information peut permettre, par exemple, de déterminer l'instant précis, ou le décalage angulaire précis, auquel la bougie de la chambre de combustion du moteur doit être allumée.

On connaît ainsi des solutions mettant en œuvre un capteur de position sans contact, le capteur étant disposé fixement sur le carter cylindre et repérant la proximité d'une cible disposée fixement sur le piston ou sur la bielle. Il peut s'agir d'un capteur à effet Hall, et dans ce cas la cible comprend un élément magnétique ou une masse métallique. Le signal délivré par le capteur peut être analysé, et son maximum indique l'instant auquel la cible est positionnée au plus près du capteur. Un modèle numérique ou des tables préétablies permettent de déterminer le rapport volumétrique en combinant par exemple l'information délivrée par le capteur à la position angulaire du vilebrequin. Ces solutions sont notamment connues de DE102015217152, US4407155, DE102009013323 ou JP2012207642.

L'espace défini par le carter cylindre dans lequel différentes pièces mobiles (vilebrequin, pistons, bielles...) sont en mouvement est particulièrement restreint. Les éléments additionnels qui sont placés dans ce volume (cible, capteur...) doivent être précisément disposés et configurés pour ne pas interférer avec le fonctionnement du moteur, tout en assurant leurs fonctions avec une grande fiabilité. On cherche notamment à éviter l'intégration d'éléments additionnels qui viendrait modifier la géométrie des cylindres et/ou de tout usinage qui pourrait venir endommager une chemise dont peuvent être munis ces cylindres.

### BREVE DESCRIPTION DE L'INVENTION

En vue de la réalisation de l'un de ces buts, l'objet de l'invention propose un piston pour moteur à combustion interne, selon la revendication 1.

Selon l'invention, la cible est portée par un corps de maintien maintenu au moins en partie à l'intérieur de l'espace interne du piston.

Selon d'autres caractéristiques avantageuses et non limitatives de l'invention, prises seules ou selon toute combinaison techniquement réalisable :
- Le piston comprend un axe de piston et le corps de maintien est maintenu par l'axe de piston ;
- le bras du corps de maintien est flexible;
- le bras flexible est en contact forcé avec une surface interne de la jupe en deux zones d'appui diamétralement opposées l'une de l'autre ;
- le corps de maintien est clipsé sur le bas de jupe ;
- le corps de maintien et le bas de jupe sont chacun munis d'une gorge et/ou d'un ergot coopérant pour permettre leur clipsage ;
- le bas de jupe est muni d'au moins une encoche pour recevoir la cible ;
- la cible est un corps magnétique ou métallique.

Selon un autre aspect, l'invention propose un moteur à combustion interne comprenant le piston de l'invention, un carter-cylindre définissant au moins un cylindre et présentant au moins un alésage débouchant sous le cylindre, et inséré dans le l'alésage, un dispositif de mesure comprenant un détecteur de passage, la cible étant disposée en vis à vis du détecteur de passage, lorsque le piston est au voisinage de la position de point mort bas.

Selon d'autres caractéristiques avantageuses et non limitatives de l'invention, prises seules ou selon toute combinaison techniquement réalisable :
- l'alésage est perpendiculaire à un axe de vilebrequin du moteur ;
- le détecteur de passage comprend un capteur à effet Hall ;
- le moteur présente un taux de compression variable ;
- le détecteur de passage est situé dans une zone de détection en dehors d'une zone balayée par la jupe dans le cylindre.

### BREVE DESCRIPTION DES DESSINS

D'autres caractéristiques et avantages de l'invention ressortiront de la description détaillée de l'invention qui va suivre en référence aux figures annexées sur lesquelles :
- La figure 1 représente un piston conforme à l'invention, pour un moteur à combustion interne;
- la figure 2 représente un moteur à combustion interne comportant le piston 1 de la figure 1;
- La figure 3 représente un premier mode de réalisation d'un corps de maintien d'une cible sur le piston ;
- les figures 4a, 4b, 4c et 5 représentent différents modes de réalisation du corps de maintien.

### DESCRIPTION DETAILLEE DE L'INVENTION

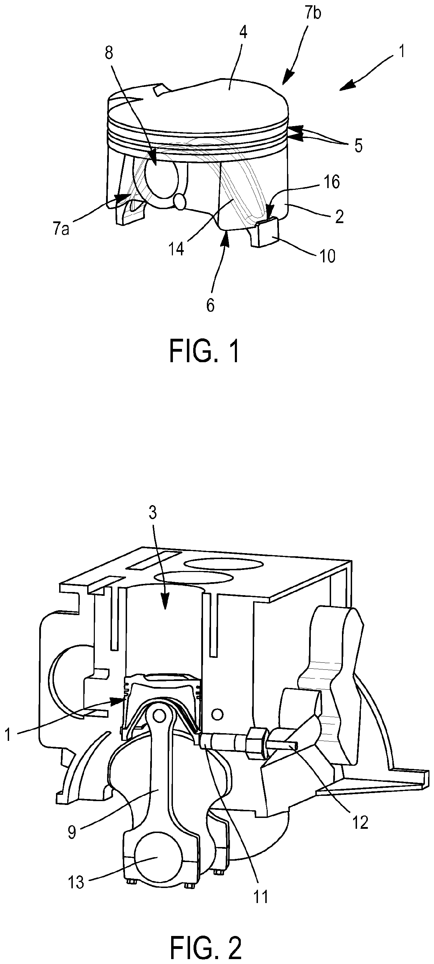

La figure 1 représente un piston de combustion 1, pour un moteur à combustion interne, conforme à l'invention. La figure 2 représente un moteur à combustion interne comportant le piston 1 de la figure 1.

Le piston 1 comprend une jupe 2 définissant un espace interne du piston 1, et permettant de guider en translation le piston 1 dans un cylindre 3 du moteur. Le piston 1 présente également, de manière tout à fait conventionnelle, une calotte 4 et des gorges 5 pour porter des segments. On désignera dans la présente demande comme «bas de jupe 6» l'extrémité libre de la jupe 2 (sa tranche), opposée à la calotte 4. La jupe 2 peut présenter une tranche ou section circulaire, ou en portion de cercle comme cela est représenté dans l'exemple de la figure 1. La jupe est munie de deux bossages renforcés 7a, 7b permettant de retenir un axe de piston 8 pour recevoir le pied d'une bielle 9.

Un piston 1 conforme à l'invention porte également une cible 10 disposée sous le bas de jupe 6, c'est à dire disposée directement en contact avec la tranche de la jupe 6. La cible 10 peut comprendre un corps métallique et/ou magnétique, ou, d'une manière générale, être constituée de tous matériaux dont le passage à proximité d'un détecteur de passage 11 disposé dans le moteur peut être repéré. Ce détecteur 11 peut comprendre un capteur à effet Hall.

Bien entendu, la cible 10 est disposée sous le bas de jupe 6 de manière à ne pas interférer avec le mouvement du piston 1 de son point mort haut à son point mort bas lors de la répétition des cycles de fonctionnement. À ce titre, elle peut être disposée légèrement en retrait de la jupe 6, en partie à l'intérieur de l'espace interne du piston 1.

Comme cela est bien apparent sur la figure 2, le positionnement de la cible 10 sous le bas de jupe 6 est particulièrement avantageux, en ce qu'il permet de placer le détecteur 11 directement sous le cylindre de combustion 3. Plus spécifiquement, le carter cylindre définissant le cylindre 3 est percé d'un alésage, débouchant sous le cylindre 3, et dans lequel peut être inséré un dispositif de mesure 12 comportant le détecteur de passage 11.

Cette configuration permet de placer la cible 10 en vis-à-vis du détecteur de passage 11 lorsque le piston 1 est en position de point mort bas, ou dans une position proche de celui-ci. On évite de la sorte de faire déboucher l'alésage directement dans le cylindre 3, ce qui aurait été nécessaire, si la cible 10 avait été portée par le piston 1 lui-même. Un tel usinage est en effet susceptible d'endommager la surface interne du cylindre 3 et affecter les performances du moteur, notamment lorsque le cylindre 3 comprend une chemise intégrée ou insérée à la coulée. En d'autres termes, la zone de détection dans laquelle est située le détecteur de passage 11 est en dehors de la zone balayée par la jupe dans la chemise du cylindre 3.

De plus, cette configuration permet d'obtenir une mesure très directe, et donc précise, de la position du piston 1 sans interférer avec le fonctionnement du moteur, ce qui aurait été plus difficile à obtenir en faisant porter la cible 10 par la bielle 9.

Avantageusement, pour en faciliter son usinage, l'alésage formé dans le carter cylindre peut être perpendiculaire à l'axe principal de vilebrequin 13.

Le positionnement de la cible 10 sous le bas de jupe 6 associé au positionnement du détecteur 11 sous le cylindre 3 apparaissent très avantageux. Toutefois cette configuration impose de rendre solidaire la cible 10 au piston 1 sans affecter son fonctionnement ou sa géométrie. Cela peut être difficile à réaliser lorsque la cible 10 est assemblée directement par vissage, collage ou insertion à la coulée sur le piston 1. La présente invention prévoit alors astucieusement de faire porter la cible 10 par un corps de maintien 14 maintenu au moins en partie à l'intérieur de l'espace interne du piston 1.

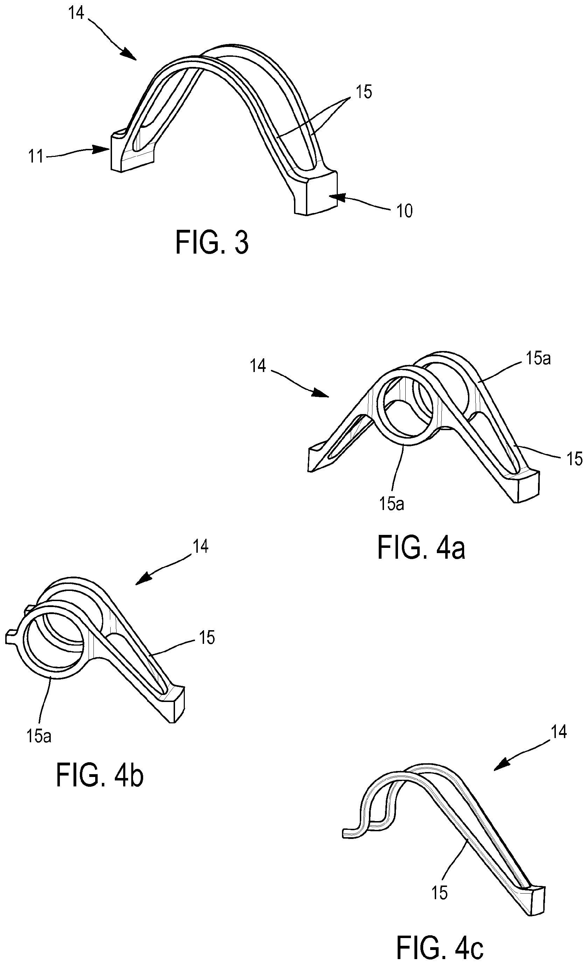

La figure 3 représente un premier mode de réalisation du corps de maintien 14. Dans ce mode de mise en œuvre, le corps de maintien 14 comprend un bras flexible 15 à une extrémité de laquelle est rattaché la cible 10, ou un support d'une telle cible 10. Une pièce d'extrémité 11 peut être placée à l'autre extrémité du bras flexible 15 pour donner au corps de maintien 14 une apparence symétrique et faciliter son assemblage au piston 1.

Comme cela est apparent sur la figure 1, le corps de maintien 14 est assemblé au piston 1 dans ce mode de réalisation en faisant supporter le bras flexible 15 par l'axe de piston 8, et en formant deux zones d'appui sur le bas de jupe 6, diamétralement opposées l'une de l'autre. Le bras flexible 15 peut être munis d'un évidement central permettant le passage du pied de bielle 8. Les extrémités du bras flexible 15 sont en appui forcé sur la surface interne de la jupe 2, au niveau des zones d'appui, de manière à placer la cible 10 sous le bas de jupe 6. Pour permettre d'ajuster la position de la cible 10 et pour permettre de bloquer tout mouvement du corps de maintien 14, le bas de jupe 6 peut être munis d'au moins une encoche 16 dans laquelle peut se loger la cible 10 et/ou la pièce d'extrémité 11.

Les figures 4a, 4b et 4c représentent d'autres modes de réalisation du corps de maintien 14. Sur la figure 4a, le bras flexible 15 est muni d'une rondelle centrale 15a permettant une reprise des efforts de maintien par l'axe de piston.

Sur les figures 4b et 4c, le corps de maintien 14 présente une forme asymétrique, respectivement avec et sans rondelle centrale 15a. Dans ces modes de mise en œuvre, le corps de maintien 14 prend appui en une unique zone d'appui de la surface interne de la jupe 6.

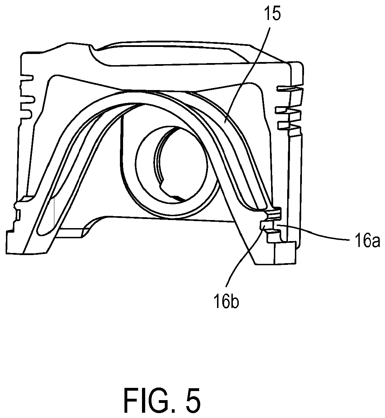

La figure 5 représente un mode de réalisation particulièrement avantageux de l'invention. Dans ce mode de réalisation, le bras flexible 15 et la jupe 6 sont clipsés l'un à l'autre, au moins au niveau d'une zone d'appui. À cet effet, au moins une extrémité du bras flexible 15 et la surface interne de la jupe, au niveau du bas de jupe 6, sont chacun munies d'une gorge 16b et/ou d'un ergot 16a dont les formes coopèrent pour permettre ce clipsage. Ainsi, le corps de maintien 14 ne nécessite pas la présence de l'axe de piston pour tenir en place, ce qui contribue à faciliter son montage.

Dans ce mode de réalisation, comme dans tous les modes de régulation exposée jusqu'à présent, on peut prévoir des encoches 16 en bas de jupe 6 pour bloquer tout mouvement de la pièce de maintien 14. Le bras flexible 15 peut comprendre un évidement pour libérer un passage pour le pied de bielle. Dans ce dernier mode mis en œuvre, le maintien étant assuré par le mécanisme de clipsage, il n'est pas nécessaire que le bras 15 soit flexible pour assurer l'appui forcé du corps de maintien 14 contre la surface interne du piston.

Bien entendu l'invention n'est pas limitée aux modes de réalisation décrits et on peut y apporter des variantes sans sortir du cadre de l'invention tel que défini par les revendications.

## Revendications

1. Piston (1) pour moteur à combustion interne, comprenant
• une jupe (2) définissant un espace interne du piston (1) et présentant un bas de jupe (6) ;
• une cible (10) ;
le piston (1) étant **caractérisé en ce que** la cible est disposée sous le bas de jupe (6) pour coopérer avec un détecteur de passage (11) disposé dans le moteur, la cible (10) étant portée par un corps de maintien (14) maintenu au moins en partie à l'intérieur de l'espace interne du piston (1), le corps de maintien (14) comprenant un bras (15) présentant un évidement permettant le passage d'un pied de bielle.

2. Piston (1) selon la revendication précédente comprenant un axe de piston (8) et dans lequel le corps de maintien (14) est maintenu par l'axe de piston (8).

3. Piston (1) selon l'une des revendications précédentes dans lequel le bras (15) du corps de maintien (14) est flexible.

4. Piston (1) selon la revendication précédente dans lequel le bras flexible (15) est en contact forcé avec une surface interne de la jupe (2), en deux zones d'appui diamétralement opposées l'une de l'autre.

5. Piston (1) selon l'une des revendications précédentes dans lequel le corps de maintien (14) est clipsé sur le bas de jupe (6).

6. Piston (1) selon la revendication précédente dans lequel le corps de maintien (14) et le bas de jupe (6) sont chacun muni d'une gorge (16b) et/ou d'un ergot (16a) coopérant pour permettre leurs clipsage.

7. Piston (1) selon l'une des revendications précédentes dans lequel le bas de jupe (6) est muni d'au moins une encoche (16) pour recevoir la cible (10).

8. Piston (1) selon l'une des revendications précédentes dans lequel la cible (10) est un corps magnétique ou métallique.

9. Moteur à combustion interne comprenant un piston (1) selon l'une des revendications précédentes ; un carter-cylindre définissant au moins un cylindre (3) et présentant au moins un alésage débouchant sous le cylindre (3), et inséré dans l'alésage, un dispositif de mesure (12) comprenant un détecteur de passage (11), la cible (10) étant disposée en vis-à-vis du détecteur de passage (11), lorsque le piston (1) est au voisinage de la position de point mort bas.

10. Moteur à combustion interne selon la revendication précédente dans lequel l'alésage est perpendiculaire à un axe de vilebrequin du moteur.

11. Moteur à combustion interne selon l'une des deux revendications précédentes dans lequel le détecteur de passage (11) comprend un capteur à effet Hall.

12. Moteur à combustion interne selon l'une des trois revendications précédentes, le moteur présentant un taux de compression variable.

13. Moteur à combustion interne selon l'une des quatre revendications précédentes dans lequel le détecteur de passage (11) est situé dans une zone de détection en dehors d'une zone balayée par la jupe (2) dans le cylindre (3) .

## Patentansprüche

1. Kolben (1) für einen Verbrennungsmotor, umfassend
• einen Schaft (2), der einen Innenraum des Kolbens (1) definiert und einen Schaftboden (6) aufweist;
• ein Ziel (10);
wobei der Kolben (1) **dadurch gekennzeichnet ist, dass** das Ziel unter dem Schaftboden (6) angeordnet ist, um mit einem im Motor angeordneten Durchgangsdetektor (11) zusammenzuwirken, wobei das Ziel (10) von einem Haltekörper (14) getragen wird, der zumindest teilweise im Inneren des Innenraums des Kolbens (1) gehalten wird, wobei der Haltekörper (14) einen Arm (15) umfasst, der eine Aussparung aufweist, die den Durchgang eines Pleuelkopfs zulässt.

2. Kolben (1) nach dem vorhergehenden Anspruch, einen Kolbenbolzen (8) umfassend, wobei der Haltekörper (14) von dem Kolbenbolzen (8) gehalten wird.

3. Kolben (1) nach einem der vorhergehenden Ansprüche, wobei der Arm (15) des Haltekörpers (14) biegsam ist.

4. Kolben (1) nach dem vorhergehenden Anspruch, wobei der biegsame Arm (15) in zwei einander diametral gegenüberliegenden Lagerbereichen in Zwangskontakt mit einer Innenfläche des Schaftes (2) steht.

5. Kolben (1) nach einem der vorhergehenden Ansprüche, wobei der Haltekörper (14) am Schaftboden (6) eingerastet ist.

6. Kolben (1) nach dem vorhergehenden Anspruch, wobei der Haltekörper (14) und der Schaftboden (6) jeweils mit einer Nut (16b) und/oder einer Nase (16a) versehen sind, die zusammenwirken, um ihr gegenseitiges Einrasten zu ermöglichen.

7. Kolben (1) nach einem der vorhergehenden Ansprüche, wobei der Schaftboden (6) mit mindestens einer Kerbe (16) zur Aufnahme des Ziels (10) versehen ist.

8. Kolben (1) nach einem der vorhergehenden Ansprüche, wobei das Ziel (10) ein magnetischer oder metallischer Körper ist.

9. Verbrennungsmotor, umfassend einen Kolben (1) nach einem der vorhergehenden Ansprüche; ein Zylindergehäuse, das mindestens einen Zylinder (3) definiert und mindestens eine Bohrung mit einer Öffnung unter dem Zylinder (3) aufweist, und eine in die Bohrung eingesetzte Messeinrichtung (12), die einen Durchgangsdetektor (11) umfasst, wobei das Ziel (10) gegenüber dem Durchgangsdetektor (11) angeordnet ist, wenn sich der Kolben (1) in der Nähe der Stellung am unteren Totpunkt befindet.

10. Verbrennungsmotor nach dem vorhergehenden Anspruch, wobei die Bohrung senkrecht zu einer Kurbelwellenachse des Motors verläuft.

11. Verbrennungsmotor nach einem der vorhergehenden Ansprüche, wobei der Durchgangsdetektor (11) einen Hall-Effekt-Sensor umfasst.

12. Verbrennungsmotor nach einem der drei vorhergehenden Ansprüche, wobei der Motor ein variables Verdichtungsverhältnis aufweist.

13. Verbrennungsmotor nach einem der vier vorhergehenden Ansprüche, wobei der Durchgangsdetektor (11) in einem Erfassungsbereich außerhalb eines von dem Schaft (2) überstrichenen Bereichs im Zylinder (3) angeordnet ist.

## Claims

1. Piston (1) for an internal combustion engine, comprising
• a skirt (2) which defines an internal space of the piston (1) and has a skirt bottom (6);
• a target (10);
the piston (1) being **characterized in that** the target is arranged under the skirt bottom (6) in order to cooperate with a passage detector (11) arranged in the engine, the target (10) being carried by a holding body (14) held at least in part inside the internal space of the piston (1), the holding body (14) comprising an arm (15) having a recess which allows a connecting rod small end to pass.

2. Piston (1) according to the preceding claim comprising a piston pin (8), wherein the holding body (14) is held by the piston pin (8).

3. Piston (1) according to either of the preceding claims, wherein the arm (15) of the holding body (14) is flexible.

4. Piston (1) according to the preceding claim, wherein the flexible arm (15) is in forced contact with an internal surface of the skirt (2), in two support zones diametrically opposed to one another.

5. Piston (1) according to any of the preceding claims, wherein the holding body (14) is clipped onto the skirt bottom (6).

6. Piston (1) according to the preceding claim, wherein the holding body (14) and the skirt bottom (6) are each provided with a groove (16b) and/or a lug (16a) which cooperate to allow the clipping thereof.

7. Piston (1) according to any of the preceding claims, wherein the skirt bottom (6) is provided with at least one notch (16) for receiving the target (10).

8. Piston (1) according to any of the preceding claims, wherein the target (10) is a magnetic or metal body.

9. Internal combustion engine comprising a piston (1) according to any of the preceding claims; a cylinder block defining at least one cylinder (3) and having at least one bore which opens beneath the cylinder (3) and, inserted into the bore, a measuring device (12) comprising a passage detector (11), the target (10) being arranged opposite the passage detector (11) when the piston (1) is in the vicinity of the bottom dead center position.

10. Internal combustion engine according to the preceding claim, wherein the bore is perpendicular to a crankshaft axis of the engine.

11. Internal combustion engine according to either of the two preceding claims, wherein the passage detector (11) comprises a Hall effect sensor.

12. Internal combustion engine according to any of the three preceding claims, the engine having a variable compression ratio.

13. Internal combustion engine according to any of the four preceding claims, wherein the passage detector (11) is located in a detection zone outside a zone swept by the skirt (2) in the cylinder (3).
